# FASCICULE DE BREVET EUROPEEN

(11) **EP 2 232 099 B1**
(45) Date de publication et mention de la délivrance du brevet: **09.05.2012**
(21) Numéro de dépôt: 09706998.3
(22) Date de dépôt: 22.01.2009
(51) Int. Cl.: F16H 1/32

(54) **DISPOSITIF DE REDUCTION DE VITESSE DE ROTATION ENTRE DEUX ARBRES**
VORRICHTUNG ZUR MINDERUNG DER DREHGESCHWINDIGKEIT ZWISCHEN ZWEI WELLEN
DEVICE FOR REDUCING ROTATION SPEED BETWEEN TWO SHAFTS

(30) Priorité: 25.01.2008 FR 0850465
(43) Date de publication de la demande: 29.09.2010
(73) Titulaire: Valeo Embrayages, 80009 Amiens (FR)
(72) Inventeur: DELEVALLEE, Jean-Louis, F-80090 Amiens (FR); MAUREL, Hervé, F-80000 Amiens (FR)
(74) Mandataire: Jeuland, Mickaël
(86) Numéro de dépôt international: PCT/FR2009/050084
(87) Numéro de publication internationale: WO 2009/095585

(56) Documents cités:
- EP-A- 0 482 529
- EP-A- 0 840 037
- JP-A- 2 107 853
- US-A1- 2003 216 213
- US-A1- 2005 255 955

## Description

La présente invention concerne un dispositif de réduction de vitesse de rotation entre des arbres menant et mené. En particulier, le dispositif de réduction est destiné à équiper un actionneur électrique d'embrayage de véhicule automobile selon la revendication 10.

On connaît déjà dans l'état de la technique, notamment d'après EP 0 840 037, un dispositif de réduction de vitesse de rotation entre des arbres menant et mené.

Ce dispositif de réduction comporte des moyens à engrenage de type épicycloïdal comprenant une couronne liée en rotation à l'arbre mené, un porte-satellite lié en rotation à l'arbre menant, et un pignon-satellite immobilisé en rotation autour de son axe mais déplaçable suivant deux axes transversaux d'un joint de type Oldham,

Le satellite est logé dans la couronne de façon à engrener avec cette couronne. Le rapport entre le nombre de dents du satellite et le nombre de dents de la couronne définit le rapport de réduction du dispositif de réduction.

Le porte-satellite forme une manivelle munie d'un orifice de couplage avec l'arbre mené et d'un palier mâle, excentré par rapport à l'orifice de couplage, monté glissant en rotation dans un palier femelle central du satellite. La manivelle forme donc un bras transversal de liaison entre l'axe de l'arbre mené et l'axe du palier mâle, US 2003/216213 décrit un dispositif de réduction de vitesse de rotation entre des arbres menant et mené selon le préamble de la revendication 1.

L'invention a notamment pour but d'améliorer les performances cinématiques d'un dispositif de réduction du type décrit dans EP 0 840 037 en s'affranchissant du palier glissant source de frottements.

A cet effet, l'invention a pour objet un dispositif de réduction de vitesse de rotation entre des arbres menant et mené, du type comportant des moyens à engrenage de type épicycloïdal comprenant :
- un satellite, ayant une forme générale de révolution autour d'un axe,
- un porte-satellite, muni d'une manivelle matérialisant un bras transversal de liaison d'un axe de rotation de l'arbre menant avec l'axe du satellite, si bien que le satellite est excentré par rapport à l'arbre menant,
dans lequel le porte-satellite comporte un roulement comprenant :
- une bague extérieure liée en rotation avec le satellite, et
- une bague intérieure formant la manivelle.

Le roulement minimise les frottements entre le satellite et le porte-satellite, optimisant ainsi les performances cinématique du dispositif.

En outre, du fait que le roulement, notamment sa bague intérieure, forme la manivelle, le dispositif selon l'invention, comportant un nombre de pièces relativement limité, est simple à assembler.

Conformément à un mode de réalisation avantageux, la bague intérieure porte une masse d'équilibrage, par exemple venue de matière avec cette bague intérieure, destinée à équilibrer l'excentration du satellite.

En variante la masse d'équilibrage pourrait être rapportée sur la bague intérieure, par exemple par soudage.

Cette masse d'équilibrage permet de limiter les vibrations habituellement dues au satellite excentré. En outre, puisque cette masse d'équilibrage est ménagée sur la bague intérieure, il n'est pas nécessaire d'ajouter un élément supplémentaire d'équilibrage au dispositif, ce qui permet de conserver une simplicité d'assemblage.

Enfin, puisque la bague intérieure assure à la fois les fonctions d'équilibrage et d'excentration du satellite, la masse d'équilibrage peut être ajustée au mieux par rapport au satellite excentré.

Un dispositif de réduction selon l'invention peut en outre comporter l'une ou plusieurs des caractéristiques suivantes :
- Le satellite a une forme générale annulaire, délimitée par un contour intérieur coopérant par emboîtement avec un contour complémentaire extérieur de la bague extérieure.
- La bague intérieure comporte un contour intérieur d'emboîtement de l'arbre menant, excentré par rapport au contour extérieur de la bague extérieure du roulement. Ce contour intérieur d'emboîtement permet d'assembler de manière simple et efficace le porte-satellite et l'arbre menant.

- Le dispositif comporte des moyens de couplage du satellite avec l'arbre mené, ces moyens de couplage comportant un joint cinématique, par exemple du type Oldham ou Cardan.
- Les moyens à engrenage épicycloïdal comportent une couronne, fixe en rotation, munie d'une denture intérieure engrenant avec une denture extérieure du satellite.
- L'arbre menant est un arbre de sortie d'un moteur électrique.
- Le dispositif comporte des moyens de fixation de la couronne sur un carter du moteur.
- Le roulement comprend des organes de roulement, choisis parmi des billes, des aiguilles et des rouleaux.

L'invention à également pour objet un actionneur électrique d'embrayage de véhicule automobile, caractérisé en ce qu'il comporte un dispositif de réduction tel que défini précédemment.

L'invention sera mieux comprise à la lecture de la description qui va suivre, donnée uniquement à titre d'exemple et faite en se référant aux dessins annexés dans lesquels :
- la figure 1 est une vue en perspective éclatée d'un dispositif de réduction selon un exemple de mode de réalisation de l'invention,
- la figure 2 est un schéma des engrenages du dispositif de la figure 1,
- les figures 3 et 4 sont des vues en perspective, selon des angles de vue respectivement avant et arrière, d'un porte-satellite du dispositif de la figure 1,
- les figures 5 et 6 sont des vues, respectivement en perspective et en coupe longitudinale, d'une bague intérieure d'un porte satellite selon un premier exemple de variante de réalisation de l'invention,
- les figures 7 et 8 sont des vues, respectivement en perspective éclatée et en coupe longitudinale, d'une bague intérieure d'un porte satellite selon un deuxième exemple de variante de réalisation de l'invention.

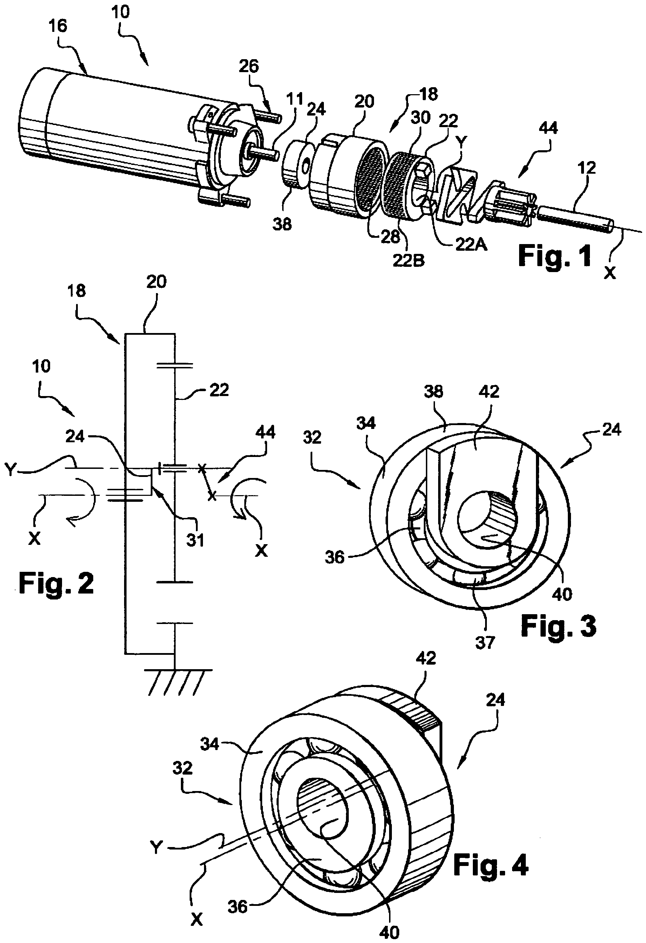

On a représenté sur la figure 1 un dispositif 10 de réduction de vitesse de rotation entre un arbre menant 11 et un arbre mené 12, sensiblement coaxiaux. L'axe de rotation des arbres menant 11 et mené 12 est désigné par la référence X.

Dans l'exemple décrit, l'arbre menant 11 est un arbre d'un moteur électrique 16.

Un tel dispositif de réduction 10 est par exemple destiné à équiper un actionneur électrique d'embrayage de véhicule automobile.

Le dispositif de réduction 10 comporte des moyens à engrenage 18, de type épicycloïdal, comportant une couronne 20, un satellite 22 et un porte satellite 24.

La couronne 20 a une forme générale annulaire de révolution autour de l'axe X des arbres menant 11 et mené 12. Cette couronne 20 est fixée à un carter du moteur 16 à l'aide de moyens de fixation 26 classiques.

La couronne 20 comporte un contour intérieur muni d'une denture intérieure 28, délimitant un logement pour le satellite 22.

Le satellite 22 est un pignon de forme générale de révolution autour d'un axe Y. Le satellite 22 a une forme générale annulaire, délimitée par un contour intérieur 22A et un contour extérieur 22B. Le contour extérieur 22B du satellite 22 est muni d'une denture extérieure 30 complémentaire de la denture intérieure 28 de la couronne 20.

Le porte-satellite 24 est muni d'une manivelle 31, matérialisant un bras transversal de liaison de l'axe X de rotation de l'arbre menant 11 avec l'axe Y du satellite. Cette manivelle 11 permet de décaler radialement les axes X de l'arbre menant et Y du satellite l'un par rapport à l'autre, comme cela est notamment visible sur la figure 2, si bien que le satellite 22 est excentré par rapport à l'arbre menant 11.

Le porte-satellite 24 permet à l'axe Y du satellite 22 de tourner autour de l'axe X de l'arbre menant 11. En outre, le porte-satellite 24 est dimensionné pour que la denture extérieure 30 du satellite 22 engraine continuellement avec la denture intérieure 28 de la couronne 20 lorsque l'axe Y du satellite 22 tourne autour de l'axe X de l'arbre menant 11. Ainsi, lorsque l'axe Y tourne autour de l'axe X, le satellite 22 tourne autour de son axe Y.

Le porte-satellite 24 comporte un roulement 32 comprenant des bagues extérieure 34 et intérieure 36 libres en rotation l'une par rapport à l'autre, grâce à des éléments 37 de roulement intercalés radialement entre ces bagues.

Dans l'exemple représenté, ces éléments de roulement 37 sont des billes, guidées de manière classique par des chemins ménagés sur les bagues intérieure 36 et extérieure 34. En variante, les éléments de roulement pourraient être des aiguilles ou des rouleaux.

La bague extérieure 34 est reliée en rotation au satellite 22. Par exemple, le contour intérieur 22A du satellite 22 coopère par emboîtement avec un contour complémentaire extérieur 38 de la bague extérieure 34.

La bague intérieure 36 est destinée à être reliée en rotation avec l'arbre menant 11, de façon que l'axe X de l'arbre menant soit décalé radialement par rapport à l'axe Y du satellite 22. Ainsi, la bague intérieure 36 forme la manivelle.

La bague intérieure 36 comporte un contour intérieur 40 d'emboîtement de l'arbre menant 11, formant des moyens de couplage du porte-satellite 24 avec cet arbre menant 11. Ce contour intérieur 40 est excentré par rapport au contour extérieur 38 de la bague extérieure 34, de façon à former la manivelle. De préférence, le contour intérieur 40 délimite un alésage de section circulaire selon un axe X décalé radialement par rapport à l'axe Y de rotation de la bague extérieure 34 autour de la bague intérieure 36.

Afin d'équilibrer l'excentration du satellite 22 par rapport à l'axe X de l'arbre menant 11, la bague intérieure 36 porte une masse d'équilibrage 42.

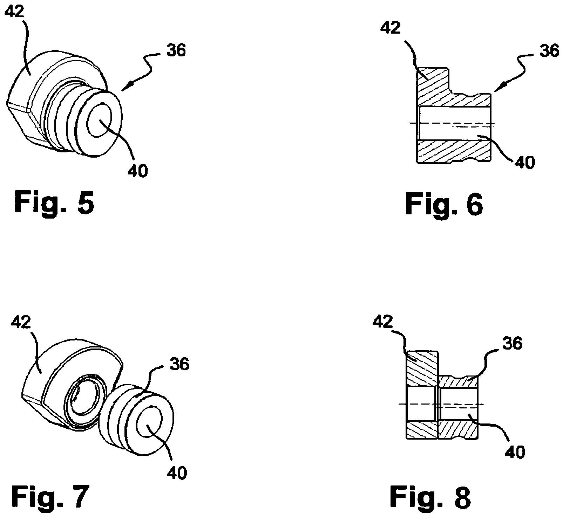

Conformément à une première variante de réalisation, représentée sur les figures 5 et 6, la masse d'équilibrage 42 est venue de matière avec la bague intérieure 36.

Dans ce cas, l'élément formant à la fois la bague intérieure 36 et la masse d'équilibrage 42 est obtenu par usinage d'un élément brut, par exemple par forgeage, frappe à froid, moulage et/ou rectification.

Conformément à une deuxième variante de réalisation, représentée sur les figures 7 et 8, la masse d'équilibrage 42 est rapportée sur la bague intérieure 36.

Dans ce cas, la masse d'équilibrage 42 est formée par usinage, par exemple par frittage, découpage, emboutissage et/ou rectification. Puis, cette masse d'équilibrage 42 est rapportée sur la bague intérieure 36, de préférence par soudage.

On notera que, puisque le contour intérieur 40 et la masse d'équilibrage 42 sont ménagées sur la même bague intérieure 36, on assure, dès la conception du roulement, que ce contour intérieur 40 et cette masse d'équilibrage 42 seront agencées de manière optimale l'une par rapport à l'autre dans le dispositif 10.

Afin d'aligner axialement l'arbre mené 12 avec l'arbre menant 11, on prévoit des moyens 44 de couplage du satellite 22 avec l'arbre mené 12, comprenant un joint cinématique classique de type Oldham. En variante, le joint pourrait être d'un autre type, par exemple du type Cardan.

On notera que le rapport entre le nombre de dents de la denture extérieure 30 du satellite 22 et le nombre de dents de la denture intérieure 28 de la couronne 20 définit le rapport de réduction du dispositif de réduction 10. Généralement, on choisira un rapport de réduction allant jusqu'à environ 1/30, par exemple 1/15 ou 1/20.

## Revendications

1. Dispositif (10) de réduction de vitesse de rotation entre des arbres menant (11) et mené (12), du type comportant des moyens (18) à engrenage de type épicycloïdal, comprenant :
- un satellite (22), ayant une forme générale de révolution autour d'un axe (Y),
- un porte-satellite (24), muni d'une manivelle (31) matérialisant un bras transversal de liaison d'un axe de rotation (X) de l'arbre menant (11) avec l'axe (Y) du satellite (22), si bien que le satellite (22) est excentré par rapport à l'arbre menant (11),
**caractérisé en ce que** le porte-satellite (24) comporte un roulement (32) comprenant :
- une bague extérieure (34) liée en rotation avec le satellite (22), et
- une bague intérieure (36) formant la manivelle (31) et comportant un contour intérieur (40) d'emboîtement de l'arbre menant (11) formant des moyens de couplage (44) du porte-satellite (24) avec cet arbre menant (11), ledit contour intérieur (40) délimitant un alésage de section circulaire selon l'axe X décalé radialement par rapport à l'axe Y de rotation de la bague extérieure (34) autour de la bague intérieure (36).

2. Dispositif de réduction (10) selon la revendication 1, dans lequel la bague intérieure (36) du roulement (32) porte une masse d'équilibrage (42) venue de matière avec cette bague intérieure (36), destinée à équilibrer l'excentration du satellite (22).

3. Dispositif de réduction (10) selon la revendication 1, dans lequel la bague intérieure (36) du roulement (32) porte une masse d'équilibrage (42) rapportée sur cette bague intérieure (36), destinée à équilibrer l'excentration du satellite (22).

4. Dispositif de réduction (10) selon l'une quelconque des revendications précédentes, dans lequel le satellite (22) a une forme générale annulaire, délimitée par un contour intérieur (22A) coopérant par emboîtement avec un contour complémentaire extérieur (38) de la bague extérieure (34).

5. Dispositif de réduction (10) selon la revendication 4, dans lequel le contour intérieur (40) d'emboîtement de l'arbre menant (11) est excentré par rapport au contour extérieur (38) de la bague extérieure (34).

6. Dispositif de réduction (10) selon l'une quelconque des revendications précédentes, comportant des moyens de couplage (44) du satellite avec l'arbre mené, ces moyens de couplage (44) comprenant un joint cinématique, par exemple de type Oldham ou Cardan.

7. Dispositif de réduction (10) selon l'une quelconque des revendications précédentes, dans lequel les moyens (18) à engrenage épicycloïdal comportent une couronne (20), fixe en rotation, munie d'une denture intérieure (28) engrenant avec une denture extérieure (30) du satellite (22).

8. Dispositif de réduction (10) selon l'une quelconque des revendications précédentes, dans lequel l'arbre menant (11) est un arbre d'un moteur électrique.

9. Dispositif de réduction (10) selon les revendications 7 et 8 prises ensemble, comportant des moyens de fixation (26) de la couronne (20) sur un carter du moteur (16).

10. Actionneur électrique d'embrayage de véhicule automobile, **caractérisé en ce qu'**il comporte un dispositif de réduction (10) selon l'une quelconque des revendications 1 à 9.

## Claims

1. Device (10) for reducing the rotation speed between driving (11) and driven (12) shafts, of the type comprising a gear means (18) of the epicyclic type, comprising:
- a satellite (22) having a general révolution shape about an axis (Y),
- a satellite holder (24), provides with a crank (31) representing a transverse linking arm between a rotation axis (X) of the driving shaft (11) and the axis (Y) of the satellite (22), so that the satellite (22) is eccentric relative to the driving shaft (11),
**characterised in that** the satellite holder (24) includes a bearing (32) comprising:
- an outer ring (34) rotatingly connected with the satellite (22), and
- an inner ring (36) refining the crank (31) and comprising an inner contour (40) for fitting of the driving shaft (11), thus forming means (44) for coupling of the satellite-holder (24) with this driving shaft (11), the said inner contour (40) delimiting a bore with a cross-section which is circular according to the axis (X) and is offset radially relative to the axis (Y) of rotation of the outer ring (34) around the inner ring (36).

2. Reduction device (10) according to claim 1, wherein the inner ring (36) of the bearing (32) carries a balancing weight (42) made from the same material as this inner ring (36), intended to balance the eccentricity of the satellite (22).

3. Reduction device (10) according to claim 1, wherein the inner ring (36) of the bearing (32) carries a balancing weight (42) joined to this inner ring (36), intended to balance the eccentricity of the satellite (22).

4. Reduction device (10) according to any one of the preceding claims, wherein the satellite (22) has an annular general shape, delimited by an inner contour (22A) cooperating by fitting with a complimentary outer contour (38) of the outer ring (34).

5. Reduction device (10) according to claim 4, wherein the inner contour (40) for fitting of the driving shaft (11) is eccentric relative to the outer contour (3 8) of the outer ring (34).

6. Reduction device (10) according to any one of the preceding claims, comprising means (44) to couple the satellite with the driven shaft, these coupling means (44) comprising a kinematic joint, for example of the Oldham or Cardan joint type.

7. Reduction device (10) according to any one of the preceding claims, wherein the gear means (18) of the epicyclic type comprise a crown (20), which is fixed in rotation and equipped with inner toothing (28) which engages with outer toothing (30) of the satellite (22).

8. Reduction device (10) according to any one of the preceding claims, wherein the driving shaft (11) is an electric motor shaft,

9. Reduction device (10) according to claims 7 and 8 combined together, comprising means (26) for fixing the crown (20) to a casing of the motor (16).

10. Electric clutch actuator of a motor vehicle, **characterised in that** it comprises a reduction device (10) according to any one of claims 1 to 9.

## Patentansprüche

1. Vorrichtung (10) zur Reduzierung der Drehgeschwindigkeit zwischen einer Antriebswelle (11) und einer Abtriebswelle (12), mit Getriebemitteln (18) in der Art eines Planetentriebes, umfassend:
- ein Planetenrad (22) mit einer um eine Achse (Y) drehenden Grundform,
- einen Planetenradträger (24), der mit einer Kurbel (31) ausgestattet ist, die einen Querarm zur Verbindung einer Drehachse (X) der Antriebswelle (11) mit der Achse (Y) des Planetenrads (22) realisiert, so dass das Planetenrad (22) exzentrisch zu der Antriebswelle (11) ist,
**dadurch gekennzeichnet, dass** der Planetenradträger (24) ein Lager (32) aufweist, welches umfasst:
- einen drehfest mit dem Planetenrad (22) verbundenen Außenring (34), und
- einen Innenring (36), der die Kurbel (31) bildet und eine Innenkontur (40) zur Einpassung der Antriebswelle (11) hat, was Mittel (44) zur Kopplung des Planetenradträgers (24) mit dieser Antriebswelle (11) bildet, wobei die Innenkontur (40) eine Bohrung mit kreisförmigem Querschnitt entlang der Achse X begrenzt, die relativ zur Drehachse Y des Außenrings (34) um den Innenring (36) radial versetzt ist.

2. Reduzierungsvorrichtung (10) nach Anspruch 1, wobei der Innenring (36) des Lagers (32) eine einstückig mit diesem Innenring (36) ausgeführte Auswuchtmasse (42) trägt, die dazu bestimmt ist, die Exzentrizität des Planetenrads (22) auszuwuchten.

3. Reduzierungsvorrichtung (10) nach Anspruch 1 wobei der Innenring (36) des Lagers (32) eine an diesen Innenring (36) angestückte Auswuchtmasse (42) trägt, die dazu bestimmt ist, die Exzentrizität des Planetenrads (22) auszuwuchten.

4. Reduzierungsvorrichtung (10) nach einem der vorangehenden Ansprüche, wobei das Planetenrad (22) eine ringförmige Grundform hat, die durch eine Innenkontur (22A) begrenzt ist, welche durch Einpassung mit einer komplementären Außenkontur (38) des Außenrings (34) zusammenwirkt.

5. Reduzierungsvorrichtung (10) nach Anspruch 4, wobei die Innenkontur (40) zur Einpassung der Antriebswelle (11) relativ zur Außenkontur (38) des Außenrings (34) exzentrisch ist.

6. Reduzierungsvorrichtung (10) nach einem der vorangehenden Ansprüche, aufweisend Mittel (44) zur Kopplung des Planetenrads mit der Abtriebswelle, wobei diese Kopplungsmittel (44) ein kinematisches Gelenk, beispielsweise vom Typ Oldham oder Kardan umfassen

7. Reduzierungsvorrichtung (10) nach einem der vorangehenden Ansprüche, wobei die Planetengetriebemittel (18) ein feststehendes Hohlrad (20) umfassen, das mit einer Innenverzahnung (28) ausgestattet ist, welche mit einer Außenverzahnung (30) des Planetenrads (22) ineinander greift.

8. Reduzierungsvorrichtung (10) nach einem der vorangehenden Ansprüche, wobei die Antriebswelle (11) eine Welle eines Elektromotors ist.

9. Reduzierungsvorrichtung (10) nach den Ansprüchen 7 und 8 zusammengenommen, aufweisend Mittel (26) zur Befestigung des Hohlrads (20) an einem Gehäuse des Motors (16).

10. Elektrischer Aktuator einer Kupplung eines Kraftfahrzeugs, **dadurch gekennzeichnet, dass** er eine Reduzierungsvorrichtung (10) nach einem der Ansprüche 1 bis 9 umfasst.
